# EUROPEAN PATENT SPECIFICATION

(11) **EP 4 269 763 B1**
(45) Date of publication and mention of the grant of the patent: **02.12.2026**
(21) Application number: 23197852.9
(22) Date of filing: 31.01.2018
(51) Int. Cl.: F02B 19/00, F02B 19/10, F02B 19/12, F02B 19/18, F02P 13/00, F02B 23/08, F02B 23/10, F02B 37/00, F02D 13/02, F02B 19/14, F02B 23/02, F02B 23/06

(54) **ENGINE SYSTEM FOR EMISSION REDUCTION WITHOUT AFTERTREATMENT**
MOTORSYSTEM ZUR EMISSIONSREDUKTION OHNE NACHBEHANDLUNG
SYSTÈME DE MOTEUR POUR RÉDUCTION D'ÉMISSIONS SANS POST-TRAITEMENT

(30) Priority: 06.02.2017 US 201762455049 P
(43) Date of publication of application: 01.11.2023
(62) Document number(s) of the earlier application(s) in accordance with Art. 76 EPC: 18748326.8 / 3 577 325
(73) Proprietor: Cummins, Inc., Columbus, Indiana 47201 (US)
(72) Inventor: SAAD, Philipe, Indiana, 47201 (US); LAPOINTE, Leon, Indiana, 47203 (US); SASIDHARAN, Premjee, Indiana, 47201 (US); WATANABE, Atsushiko, LONDON, N12 7BB (GB)
(74) Representative: Cleveland Scott York

(56) References cited:
- WO-A1-2009/068582
- WO-A1-2016/187628
- JP-A- 2002 266 644
- US-A- 4 522 172
- US-A- 5 709 190
- US-A1- 2006 123 788
- US-A1- 2015 219 006
- US-A1- 2016 024 994

## Description

### TECHNICAL FIELD OF THE DISCLOSURE

The present disclosure relates to an engine system comprising an internal combustion engine and a high efficiency turbocharger, where the engine system as a whole is optimized to reduce emissions and improve brake thermal efficiency without an aftertreatment system.

### BACKGROUND OF THE DISCLOSURE

There is a consistent desire to create an engine system that results in lower emissions and higher efficiency. However, common engine designs use aftertreatment systems to achieve lower emissions. The use of aftertreatment systems in engine designs results in additional costs and maintenance with more complicated systems. Thus, it would be beneficial to have an engine system capable of reducing emissions of an engine system without an aftertreatment system in order to avoid the additional costs and maintenance as well as have a more efficient overall engine system.

### SUMMARY OF THE DISCLOSURE

In one embodiment of the present invention, there is provided a piston for an internal combustion engine, the piston comprising a bowl that is machined into a top surface of the piston, the bowl comprising a bottom, a salient angle formed between the top surface of the piston and an interior wall of the bowl, a bowl rim defining an opening diameter, and a depth defined between the bowl rim and the bottom, wherein the salient angle is defined such that a ratio between the opening diameter and the depth affects the salient angle, the ratio ranges approximately from 0.5 to 2.0, and the piston is configured to form a portion of a combustion chamber of the internal combustion engine.

In one aspect of the piston, the salient angle is at least 10 degrees.

In a further aspect of the piston, the salient angle ranges from 20 to 25 degrees.

In another aspect of the piston, a depth between the diameter of the bottom is constant across the diameter.

In a further aspect of the piston, the ratio is defined to minimize the opening diameter of the piston to thereby generate a high squish velocity to provide a high level of chamber turbulence to generate combustion fast heat release in the combustion chamber.

In another aspect of the piston, the piston is configured to generate a high compression ratio in the combustion chamber in the range of 12 to 18.

In a further aspect of the piston, the bowl is arranged to have charge forced into the bowl through a smaller opening diameter than a diameter of the bottom, causing an increase in velocity or turbulence of the charge within the combustion chamber.

In another aspect of the piston, the piston has a maximum depth that is limited by a thickness of the piston between the bottom of the bowl and a bore required for a wrist pin for operatively connecting a crankshaft to the piston, the thickness being such that the piston will be able to withstand heat and pressure of a combustion process in the combustion chamber.

In a further aspect of the piston, the salient angle is not much greater than 20-25 degrees such that the bowl rim does not become too hot such that the bowl rim cannot be cooled without inhibiting efficient operation of the internal combustion engine.

In another embodiment of the present invention, there is provided a cylinder block comprising: at least one cylinder bore that is formed at the cylinder block to thereby form a cylinder that corresponds to the at least one cylinder bore; and the piston as described above.

In one aspect of the cylinder block, the piston is configured to be positioned within the at least one a cylinder and to receive intake air within the bowl before reaching top dead center on an exhaust stroke of the piston and to refrain from receiving intake air within the bowl before bottom dead center of an intake stroke of the piston.

In a further aspect of the cylinder block, the a diameter of at least one intake valve of the cylinder is greater than a diameter of at least one exhaust valve of the cylinder.

In another aspect of the cylinder block, the piston is configured to generate a high compression ratio in the cylinder ranging approximately from 12 to 18.

In another embodiment of the present invention, there is provided an internal combustion engine comprising a cylinder head including at least one intake valve and at least one exhaust valve; and a cylinder block as described above.

In another aspect of the internal combustion engine, the internal combustion engine further comprises an ignition system that includes a pre-chamber that has at least one of: at least one orifice in fluid communication with the combustion chamber; an open end into the combustion chamber; and an extension into the combustion chamber.

### BRIEF DESCRIPTION OF THE DRAWINGS

Advantages and features of the embodiments of this disclosure will become more apparent from the following detailed description of exemplary embodiments when viewed in conjunction with the accompanying drawings, wherein:
Fig. 1 is a schematic view of an embodiment of an engine system of the present disclosure including an internal combustion engine and a turbocharger;
Fig. 2 is a schematic view of another embodiment of an engine system of the present disclosure further including a waste gate;
Fig. 3 is a schematic view of a piston of the internal combustion engine of Fig. 1;
Fig. 4 is a top plan view of valve bores in a cylinder head of the internal combustion engine of Fig. 1; and
Fig. 5 is a graph of a crankangle of a camshaft versus valve lift of an exhaust valve and an intake valve of the internal combustion engine of Fig. 1.

Corresponding reference characters indicate corresponding parts throughout the several views. Although the drawings represent embodiments of the present disclosure, the drawings are not necessarily to scale and certain features may be exaggerated in order to better illustrate and explain the present disclosure. The exemplifications set out herein illustrate embodiments of the disclosure, in one form, and such exemplifications are not to be construed as limiting the scope of the disclosure in any manner.

### DETAILED DESCRIPTION OF THE DRAWINGS

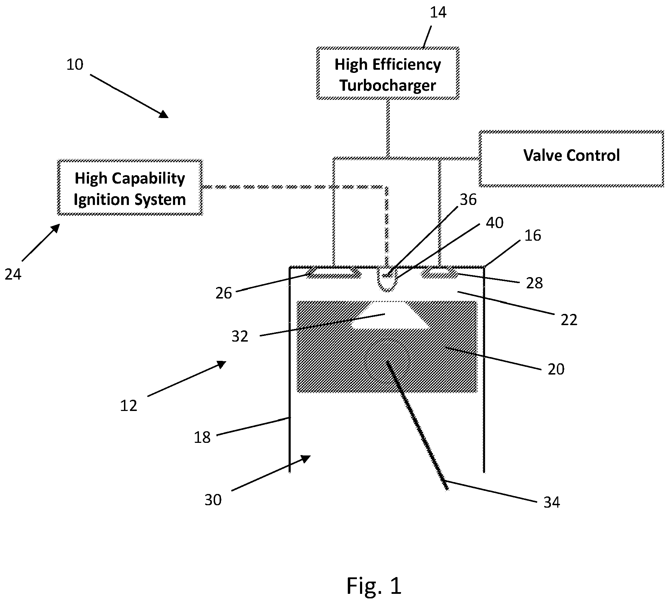

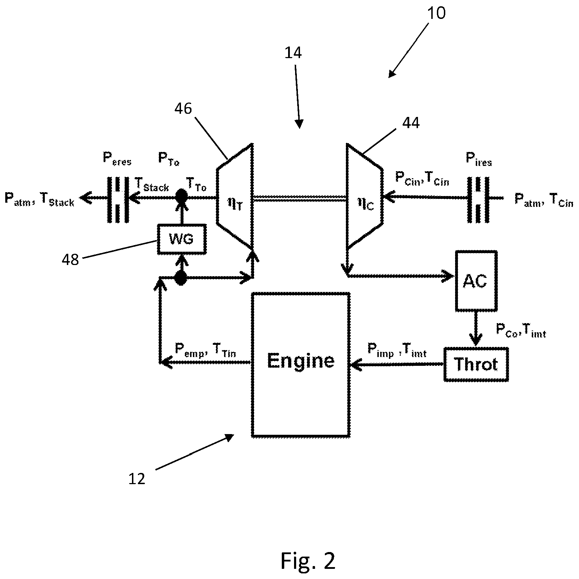

Referring to Figs. 1 and 2, an engine system 10 generally includes an internal combustion engine 12, and a high efficiency turbocharger 14 coupled to internal combustion engine 12. Internal combustion engine 12 generally includes a cylinder head 16, a cylinder block 18, a piston 20, a combustion chamber 22, and a high capability ignition system 24.

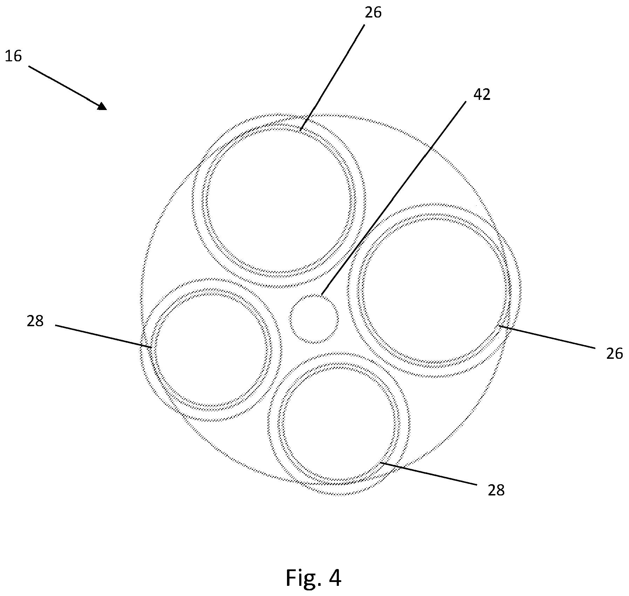

Cylinder head 16 of engine 12 generally includes at least one intake valve 26 and at least one exhaust valve 28, where a diameter of intake valve 26 is greater than a diameter of exhaust valve 28. In various embodiments, the ratio between the diameters of intake valve 26 and exhaust valve 27 is between approximately 0.7 and 0.9. The larger diameter of intake valve 26 reduces restriction on getting charge into engine 12 during an intake stroke of engine 12. The charge may comprise air only or a mixture of fuel and air. Additionally, the larger intake valve allows more charge into engine 12 in a shorter period of time. In the embodiment shown in Fig. 4, cylinder head 16 includes bores for two intake valves 26 and two exhaust valves 28, where the ratio between the diameters of intake valve 26 and exhaust valve 28 is approximately 0.75. [0031] Still referring to Figs. 1 and 2, cylinder block 18 is generally positioned adjacent cylinder head 16 and generally includes at least one cylinder bore 30 depending on the engine. For example, in a 4-cylinder engine, cylinder block 18 includes four separate cylinder bores. Combustion chamber 22 of each cylinder in internal combustion engine 12 is generally defined by cylinder head 16, cylinder bore 30 within cylinder block 18, and piston 20.

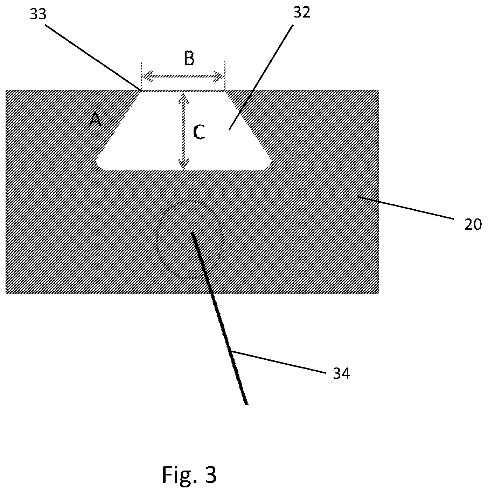

Referring to Fig. 3, in each cylinder bore 30 of cylinder block 18 is a piston 20 having a bowl 32 machined into a top or upward facing surface of the piston. Bowl 32 includes a salient angle A between the top surface of piston 20 and an interior wall of bowl 32, an opening diameter B, and a depth C. Bowl 32 is generally configured such that salient angle A is at least 10 degrees, and the ratio between opening diameter B and depth C is approximately 0.5 to 2.0. In various embodiments, salient angle A is approximately 20 to 25 degrees.

With reference still to Fig. 3, piston 20 is generally coupled to a crankshaft (not shown) of internal combustion engine 12 by way of a connecting rod 34. Connecting rod 34 is generally coupled to piston 20 by way of a wrist pin or other coupling device. In various embodiments, piston 20 is configured to generate a high degree of turbulence in the charge during the compression stroke. High turbulence contributes to a fast heat release rate which, in turn, enables high efficiency and low emissions. A piston so configured to generate high charge turbulence during the intake stroke will hereinafter be referred to an "a high turbulence piston". In order for piston 20 to be a high turbulence piston, piston 20 is configured to generate a high compression ratio in the cylinder, with values in the range of 12 to 18. For a given compression ratio, high charge turbulence is encouraged by maximizing depth C and minimizing opening diameter B. When opening diameter B of piston 20 is minimized, bowl 32 generates a high squish velocity, or velocity of the charge as piston 20 approaches top dead center. High squish velocity results in the charge being forced into bowl 32 through a smaller opening diameter B causing an increase in velocity or turbulence of the charge within the combustion chamber. The maximized squish velocity results in a high level of chamber turbulence which generates combustion fast heat release.

However, there are a few constraints on the dimensions of bowl 32. First, maximum depth C is limited by the thickness of the piston between the bottom of the bowl and the bore required for the wrist pin. If the depth C is too large, the thickness at the bottom of the bowl is too small, and the piston will not be able to withstand the heat and pressure of the combustion process. In addition, the ratio between opening diameter B and depth C affect salient angle A of bowl 32, which if too large cause a bowl rim 33 of bowl 32 to become too hot. For instance, if salient angle A is much greater than 20-25 degrees, the bowl rim 33 of bowl 32 becomes too hot and can't be cooled appropriately for efficient operation of engine 12.

Referring again to Figs. 1 and 2, high capability ignition system 24 generally includes an ignition device 36, an injector (not shown), and a pre-chamber 40. Pre-chamber 40 may be open-ended, or close-ended and having a least one orifice in fluid communication with combustion chamber 22. Pre-chamber 40 is provided to protect ignition device 36 from the high squish velocity created by piston 20. In various embodiments, pre-chamber 40 may extend down into combustion chamber 22, while in other various embodiments, pre-chamber 40 may be positioned above combustion chamber 22. The injector of system 24 is configured to provide fuel to combustion chamber 22 and/or pre-chamber 40 for combustion with air allowed in through intake valve 26. Combustion between the fuel and the air is generally ignited by ignition device 36. Ignition device 36 may be a spark plug, a laser, a diesel micro-pilot, a high-energy, high frequency electrical field, or a plasma, among other technologies. In the embodiment shown in Fig. 1, ignition device 36 is a spark plug. The duration and/or number of strikes and/or discharge profile of ignition device 36 may be varied to achieve stable combustion under dilute conditions such as high exhaust gas recirculation, high excess air, or fuels with high diluents. In various embodiments, cylinder head 16 may further include an opening 42 (Fig. 4) for at least a portion of ignition system 24 between intake valves 26 and exhaust valves 28.

Ignition system 24 is considered a high capability ignition system. A high capability ignition system is one that can generate a long duration electrical discharge at the ignition device 36. Such long duration discharge characteristics accompany a high amount of energy dissipated during the discharge event. A standard capability ignition system dissipates on the order of 10-40 millijoules per discharge event, whereas a high capability discharge system can dissipate 400-1000 millijoules per discharge event. The high capability ignition system enables utilization of intake charge that is very lean and/or dilute with high amount of exhaust gas recirculation, which reduces emissions and improves efficiency.

Referring now to Fig. 2, high efficiency turbocharger 14 generally includes a compressor 44 and a turbine 46. Compressor 44 is configured to provide compressed air to the internal combustion engine through intake valves 26. Turbine 46 is configured to convert engine exhaust gas released through exhaust valves 28 into mechanical energy to drive compressor 44. In order for turbocharger 14 to operate with high efficiency, the combined efficiency of compressor 44 and turbine 46 needs to be greater than 50%. For instance, in one embodiment, compressor 44 and turbine 46 may each be operating at approximately 80% efficiency such that the overall efficiency of the turbocharge may be approximately 60-70%, or more specifically, approximately 64%. Efficiency of the turbocharger is defined by isentropic efficiency, or a comparison between the actual performance of the device and the performance that would be achieved under idealized circumstances for the same inlet and exit states.

With reference still to Fig. 2, engine system 10 may further include a waste gate 48 positioned between the exhaust valve of internal combustion engine 12 and turbine 46 of turbocharger 14. Waste gate 48 generally includes a vent to the exterior, and is generally configured to regulate the pressure at which exhaust gases pass to turbine 46 of turbocharger 14 by opening or closing the vent. In turn, waste gate 48 may be used to regulate the speed of turbine 46, and therefore the speed of compressor 44, thus protecting engine 12 and turbocharger 14 from excessive pressure.

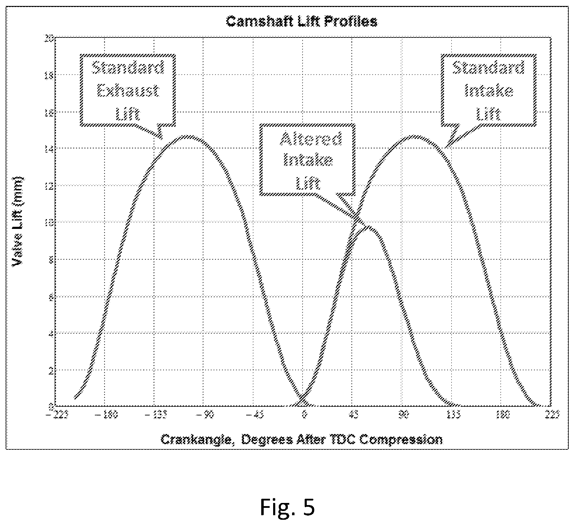

Referring now to Fig. 5, in operation, internal combustion engine 12 includes an intake stroke, a compression stroke, a power stroke, and an exhaust stroke. In various embodiments of the present disclosure, intake valve 26 is operated in a slightly different manner than normal internal combustion engines. More specifically, intake valve 26 will generally open just before top dead center of the exhaust stroke of engine 12, but close before bottom dead center on the intake stroke of engine 12. For instance, in various embodiments, intake valve 26 will generally close at least 10 degrees before bottom dead center of the intake stroke of engine 12. In some embodiments, intake valve 26 may close between approximately 10 degrees and 60 degrees prior to bottom dead center of the intake stroke. Fig. 5 diagrams the valve lift of exhaust valve 28 and intake valve 26 relative to the crankangle, in degrees, of the crankshaft after top dead center of a compression stroke of engine 12. The altered cycle in Fig. 5 shows intake valve 26 opening just prior to bottom dead center of the intake stroke, and closing approximately 45 degrees prior to bottom dead center of the intake stroke. Closing intake valve 26 early in the intake stroke reduces the dynamic compression ratio, or ratio between the volume of the compression chamber when the intake valve closes and the volume of the compression chamber at its smallest capacity or top dead center, and therefore limits the tendency of the compressed charge to ignite before ignition system 24 tells it to. The arrangement with altered intake life enables high efficiency with low emissions.

The combination of high capability ignition system 24, high efficiency turbocharger 14, large intake valves 26, bowl 32 in piston 20, and the altered cycle of the intake valve make it possible for engine 12 to run as lean as possible, thus allowing the exhaust of engine 12 to have very low quantities of emissions such as NOx, carbon monoxide, and unburnt hydrocarbons without the use of an aftertreatment system. In general, fuels that are resistant to knock should be used in engine system 12 in order to avoid knock, which generally results in failed components of engine 12.

In various embodiments, engine system 10 may further include a variable valve timing system configured to modulate a closing angle of intake valve 26 in response to engine load requirements to achieve transient capability.

While various embodiments of the disclosure have been shown and described, it is understood that these embodiments are not limited thereto. The embodiments may be changed, modified and further applied by those skilled in the art. Therefore, these embodiments are not limited to the detail shown and described previously, but also include all such changes and modifications.

Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements. The scope is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B or C may be present in a single embodiment; for example, A and B, A and C, B and C, or A and B and C. [0044] In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art with the benefit of the present disclosure to affect such feature, structure, or characteristic in connection with other embodiments whether or not explicitly described. After reading the description, it will be apparent to one skilled in the relevant art(s) how to implement the disclosure in alternative embodiments.

## Claims

1. A piston (20) for an internal combustion engine (12), the piston comprising:
a bowl (32) that is machined into a top surface of the piston, the bowl comprising:
a flat bottom,
a salient angle (A) formed between the top surface of the piston and an interior wall of the bowl,
an opening diameter (B), and
a depth (C),
wherein a ratio between the opening diameter and the depth affects the salient angle,
the ratio ranges approximately from 0.5 to 2.0, and
the piston is configured to form a portion of a combustion chamber (22) of the internal combustion engine,
wherein the salient angle ranges from 10 degrees to 25 degrees.

2. The piston of claim 1, wherein the depth is maximized and the opening diameter is minimised so as to generate a high squish velocity to provide a high level of chamber turbulence to generate combustion fast heat release in the combustion chamber.

3. The piston as in any one of the preceding claims, wherein the bowl has a maximum depth that is limited by a thickness of the piston between the bottom of the bowl and a bore required for a wrist pin for operatively connecting a crankshaft to the piston, the thickness being such that the piston will be able to withstand heat and pressure of a combustion process in the combustion chamber.

4. The piston as claimed in any one of the preceding claims, wherein the depth (C) across the opening diameter (B) is constant.

5. A cylinder block (18) comprising:
at least one cylinder bore (30) that is formed at the cylinder block to thereby form a cylinder that corresponds to the at least one cylinder bore; and
the piston (20) as in any one of the preceding claims.

6. The cylinder block of claim 5, wherein the piston is configured to be positioned within the at least one a cylinder and to receive intake air within the bowl (32) before reaching top dead center on an exhaust stroke of the piston and to refrain from receiving intake air within the bowl before bottom dead center of an intake stroke of the piston.

7. The cylinder block of claim 5 or 6, wherein a diameter of at least one intake valve (26) of the cylinder is greater than a diameter of at least one exhaust valve (28) of the cylinder.

8. The cylinder block as in any one of claims 5 to 7, wherein the piston is configured to generate a high compression ratio in the cylinder ranging approximately from 12 to 18.

9. An internal combustion engine (12) comprising:
a cylinder head (16) including at least one intake valve (26) and at least one exhaust valve (28); and
a cylinder block (18) as in any one of claims 5 to 8.

10. The internal combustion engine of claim 9, further comprising an ignition system (24) that includes a pre-chamber (40) that has at least one of:
at least one orifice in fluid communication with the combustion chamber (22);
an open end into the combustion chamber; and
an extension into the combustion chamber.

## Patentansprüche

1. Kolben (20) für einen Verbrennungsmotor (12), wobei der Kolben umfasst:
eine Mulde (32), die in einer oberen Oberfläche des Kolbens spanabhebend erzeugt ist, wobei die Mulde umfasst:
einen flachen Boden,
einen vorspringenden Winkel (A), der zwischen der oberen Oberfläche des Kolbens und einer Innenwand der Mulde gebildet wird,
einen Öffnungsdurchmesser (B) und
eine Tiefe (C),
wobei ein Verhältnis zwischen dem Öffnungsdurchmesser und der Tiefe den vorspringenden Winkel beeinflusst,
das Verhältnis ungefähr zwischen 0,5 und 2,0 beträgt, und
der Kolben dazu konfiguriert ist, einen Teil einer Brennkammer (22) des Verbrennungsmotors zu bilden,
wobei der vorspringende Winkel zwischen 10 Grad und 25 Grad beträgt.

2. Kolben nach Anspruch 1, wobei die Tiefe maximiert ist und der Öffnungsdurchmesser minimiert ist, um eine hohe Quetschgeschwindigkeit zu erzeugen, um einen hohen Grad an Kammerturbulenz bereitzustellen, um eine schnelle Wärmefreisetzung bei der Verbrennung in der Brennkammer zu erzeugen.

3. Kolben nach einem der vorstehenden Ansprüche, wobei die Mulde eine maximale Tiefe aufweist, die durch eine Dicke des Kolbens zwischen dem Boden der Mulde und einer Bohrung, die für einen Anlenkbolzen zur wirksamen Verbindung einer Kurbelwelle mit dem Kolben erforderlich ist, begrenzt ist, wobei die Dicke so beschaffen ist, dass der Kolben der Hitze und dem Druck eines Verbrennungsprozesses in der Brennkammer standhalten kann.

4. Kolben nach einem der vorstehenden Ansprüche, wobei die Tiefe (C) über den Öffnungsdurchmesser (B) konstant ist.

5. Zylinderblock (18), umfassend:
mindestens eine Zylinderbohrung (30), die am Zylinderblock gebildet ist, um dadurch einen Zylinder zu bilden, der der mindestens einen Zylinderbohrung entspricht; und
den Kolben (20) nach einem der vorstehenden Ansprüche.

6. Zylinderblock nach Anspruch 5, wobei der Kolben dazu konfiguriert ist, innerhalb des mindestens einen Zylinders positioniert zu werden und Ansaugluft in der Mulde (32) aufzunehmen, bevor er den oberen Totpunkt eines Auslasstakts des Kolbens erreicht, und keine Ansaugluft in der Mulde aufzunehmen, bevor er den unteren Totpunkt eines Einlasstakts des Kolbens erreicht.

7. Zylinderblock nach Anspruch 5 oder 6, wobei ein Durchmesser mindestens eines Einlassventils (26) des Zylinders größer ist als ein Durchmesser mindestens eines Auslassventils (28) des Zylinders.

8. Zylinderblock nach einem der Ansprüche 5 bis 7, wobei der Kolben dazu konfiguriert ist, im Zylinder ein hohes Verdichtungsverhältnis zu erzeugen, das zwischen etwa 12 und 18 beträgt.

9. Verbrennungsmotor (12), umfassend:
einen Zylinderkopf (16), der mindestens ein Einlassventil (26) und mindestens ein Auslassventil (28) beinhaltet; und
einen Zylinderblock (18) nach einem der Ansprüche 5 bis 8.

10. Verbrennungsmotor nach Anspruch 9, ferner umfassend ein Zündsystem (24), das eine Vorkammer (40) beinhaltet, die mindestens eines aufweist von:
mindestens einer Öffnung in strömungstechnischer Kommunikation mit der Brennkammer (22);
einem offenen Ende in die Brennkammer; und
einer Verlängerung in die Brennkammer.

## Revendications

1. Piston (20) pour un moteur à combustion interne (12), le piston comprenant :
une cuvette (32) usinée dans une surface supérieure du piston, la cuvette comprenant :
un fond plat,
un angle saillant (A) formé entre la surface supérieure du piston et une paroi intérieure de la cuvette,
un diamètre d'ouverture (B), et
une profondeur (C),
dans lequel le rapport entre le diamètre de l'ouverture et la profondeur affecte l'angle saillant,
le rapport va approximativement de 0,5 à 2,0, et
le piston est configuré pour former une partie d'une chambre de combustion (22) du moteur à combustion interne,
dans lequel l'angle saillant va de 10 degrés à 25 degrés.

2. Piston selon la revendication 1, dans lequel la profondeur est maximisée et le diamètre d'ouverture est minimisé de sorte à générer une vitesse d'écrasement élevée pour fournir un niveau élevé de turbulence dans la chambre afin de générer une libération de chaleur de combustion rapide dans la chambre de combustion.

3. Piston selon l'une quelconque des revendications précédentes, dans lequel la cuvette présente une profondeur maximale qui est limitée par l'épaisseur du piston entre le fond de la cuvette et un alésage requis pour un axe de piston permettant de relier fonctionnellement un vilebrequin au piston, l'épaisseur étant telle que le piston puisse résister à la chaleur et à la pression d'un processus de combustion dans la chambre de combustion.

4. Piston selon l'une quelconque des revendications précédentes, dans lequel la profondeur (C) à travers le diamètre d'ouverture (B) est constante.

5. Bloc-cylindres (18) comprenant :
au moins un alésage de cylindre (30) qui est formé au niveau du bloc-cylindres afin de former ainsi un cylindre correspondant à l'au moins un alésage de cylindre ; et
le piston (20) selon l'une quelconque des revendications précédentes.

6. Bloc-cylindres selon la revendication 5, dans lequel le piston est configuré pour être positionné à l'intérieur de l'au moins un cylindre et pour recevoir de l'air d'admission à l'intérieur de la cuvette (32) avant d'atteindre le point mort haut lors d'une course d'échappement du piston et pour s'abstenir de recevoir de l'air d'admission à l'intérieur de la cuvette avant le point mort bas lors d'une course d'admission du piston.

7. Bloc-cylindres selon la revendication 5 ou 6, dans lequel le diamètre d'au moins une soupape d'admission (26) du cylindre est supérieur au diamètre d'au moins une soupape d'échappement (28) du cylindre.

8. Bloc-cylindres selon l'une quelconque des revendications 5 à 7, dans lequel le piston est configuré pour générer un taux de compression élevé dans le cylindre allant approximativement de 12 à 18.

9. Moteur à combustion interne (12) comprenant :
une culasse (16) incluant au moins une soupape d'admission (26) et au moins une soupape d'échappement (28) ; et
un bloc-cylindres (18) selon l'une quelconque des revendications 5 à 8.

10. Moteur à combustion interne selon la revendication 9, comprenant en outre un système d'allumage (24) qui inclut une préchambre (40) qui présente au moins l'un des éléments suivants :
au moins un orifice en communication fluidique avec la chambre de combustion (22) ;
une extrémité ouverte dans la chambre de combustion ; et
une extension dans la chambre de combustion.
